Europäisches Patentamt

European Patent Office

Office européen des brevets

(19)

(11) **EP 1 244 244 B1**

(12) **FASCICULE DE BREVET EUROPEEN**

| | |
|---|---|
| (45) Date de publication et mention de la délivrance du brevet:<br>**07.12.2005 Bulletin 2005/49** | (51) Int Cl.⁷: **H04L 5/02**, H04L 27/26 |

(21) Numéro de dépôt: **02290597.0**

(22) Date de dépôt: **11.03.2002**

(54) **Egalisation à minimisation de l'erreur quadratique moyenne globale**

Entzerrung mit globaler minimierung des mittleren quadratischen Fehlers

Global MMSE equalisation

(84) Etats contractants désignés:
**AT BE CH CY DE DK ES FI FR GB GR IE IT LI LU MC NL PT SE TR**

(30) Priorité: **22.03.2001 FR 0104050**

(43) Date de publication de la demande:
**25.09.2002 Bulletin 2002/39**

(73) Titulaire: **Mitsubishi Electric Information Technology Centre Europe B.V.**
**1119 NS Schiphol Rijk (NL)**

(72) Inventeur: **Castelain, Damien,**
**Mitsubishi Electric ITE**
**35700 Rennes (FR)**

(74) Mandataire: **Maillet, Alain**
**Cabinet le Guen & Maillet,**
**5, Place Newquay,**
**B.P. 70250**
**35802 Dinard Cedex (FR)**

(56) Documents cités:
- **H LARD ET AL.: "Linear MMSE detection technique for MC-CDMA" ELECTRONICS LETTERS, vol. 36, no. 7, 30 mars 2000 (2000-03-30), pages 665-666, XP006015082 Stevenage, GB ISSN: 0013-5194**
- **VOORMAN ET AL: "Performance evaluation of the decorrelating detector for DS-CDMA systems over multipath Rayleigh fading channels with AWGN" IEEE INTERNATIONAL SYMPOSIUM ON PERSONAL, INDOOR AND MOBILE RADIO COMMUNICATIONS, 8 - 11 septembre 1998, pages 228-232, XP002186690 New York, US ISBN: 0-7803-4872-9**
- **MOTTIER, CASTELAIN: "A spreading sequence allocation procedure for MC-CDMA transmission systems" IEEE VEHICULAR TECHNOLOGY CONFERENCE, 24 - 28 septembre 2000, pages 1270-1275 vol.3, XP002186691 Piscataway, US ISBN: 0-7803-6507-0**
- **DAS ET AL.: "Computationally efficient multiuser detectors" IEEE INTERNATIONAL SYMPOSIUM ON PERSONAL, INDOOR AND MOBILE RADIO COMMUNICATIONS, 1 - 4 septembre 1997, pages 62-67, XP002186693 New York, US ISBN: 0-7803-3871-5**

## Description

La présente invention concerne une méthode et un dispositif d'égalisation pour voie descendante d'un système de télécommunication de type MC-CDMA. Plus particulièrement, la présente invention concerne une méthode et un dispositif d'égalisation de type GMMSE.

L'accès multiple à répartition par codes sur porteuses multiples (MC-CDMA pour *Multi-Carrier Code Division Multiple Access*) combine la modulation OFDM (*Orthogonal Frequency Division Multiplex*) et la technique d'accès multiple CDMA. Cette technique d'accès multiple a été proposée pour la première fois par N. Yee et al. dans l'article intitulé « Multicarrier CDMA in indoor wireless radio networks » paru dans Proceedings of PIMRC '93, Vol. 1, pages 109-113, 1993. Les développements de cette technique ont été passés en revue par S. Hara et al. dans l'article intitulé « Overview of multicarrier CDMA » publié dans IEEE Communication Magazine, pages 126-133, Décembre 1997.

Contrairement à la méthode DS-CDMA (*Direct Sequence Code Division Multiple Access*) dans laquelle le signal de chaque utilisateur est multiplié dans le domaine temporel pour étaler son spectre fréquentiel, la signature multiplie ici le signal dans le domaine fréquentiel, chaque élément de la signature multipliant le signal d'une sous-porteuse différente.

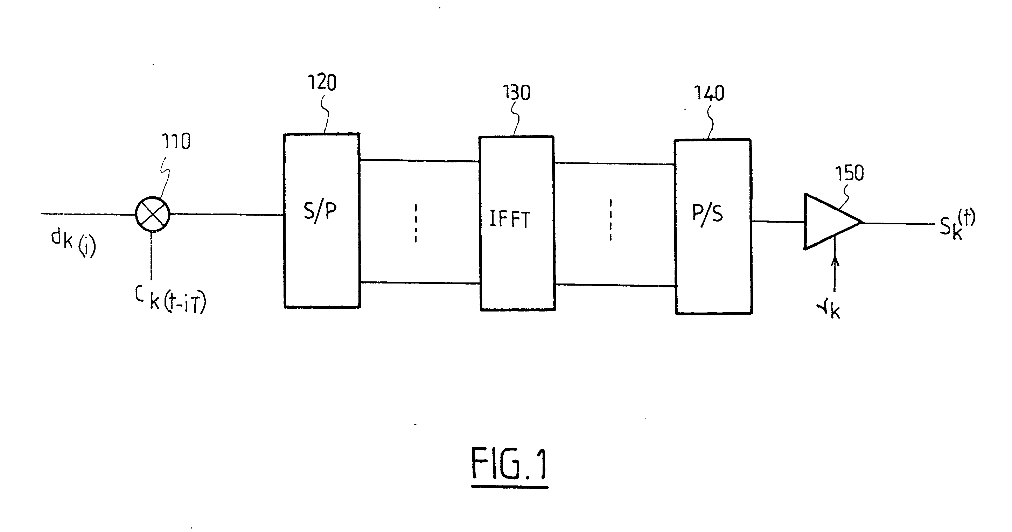

Plus précisément la Fig. 1 représente la structure d'un émetteur MC-CDMA pour un utilisateur $k$ donné. Soit $d_k(i)$ le ième symbole à émettre de l'utilisateur $k$ où $d_k(i)$ appartient à l'alphabet de modulation. Le symbole $d_k(i)$ est tout d'abord multiplié en 110 par une séquence d'étalement ou signature de l'utilisateur, notée $c_k(t)$, constituée de $N$ « chips », chaque « chip » étant de durée $T_c$, la durée totale de la séquence d'étalement correspondant à une période symbole $T$. Les résultats de la multiplication du symbole $d_k(i)$ par les différents « chips » sont convertis par le convertisseur série/ parallèle 120 en un bloc de $L$ symboles, où $L$ est en général un multiple de $N$. Nous considèrerons, pour des raisons de simplification de présentation, que $L=N$. Le bloc de $L$ symboles est ensuite soumis à une transformée de Fourier rapide inverse (IFFT) dans le module 130 avant d'être transmis au convertisseur parallèle / série 140. Afin d'éviter l'interférence inter-symbole, un intervalle de garde, de longueur supérieure à la durée de la réponse impulsionnelle du canal de transmission, est adjoint au symbole MC-CDMA. Cet intervalle est obtenu par l'adjonction (non représentée) d'un suffixe choisi identique au début dudit symbole. Le symbole ainsi obtenu est amplifié en 150 avant d'être transmis sur le canal de l'utilisateur. On voit onc que la méthode MC-CDMA s'analyse en un étalement dans le domaine spectral (avant IFFT) suivi d'une modulation OFDM.

En pratique, une station de base transmet les données pour un utilisateur $k$ sous forme de trames de $I$ symboles, chaque symbole $d_k(i)$ étant étalé par une signature réelle $c_k(t)$ de durée égale à la période symbole $T$, telle que $c_k(t)=0$ si $t\notin[0,T[$. Le signal modulé à l'instant $t=i.T+\ell.T_c$ peut alors s'écrire, si l'on omet les intervalles de garde entre symboles MC-CDMA :

$$S_k(t)=\sum_{i=0}^{I-1}\sum_{\ell=0}^{L-1}v_k.c_k(\ell.T_c).d_k(i).\exp(j.2\pi\ell/L) \qquad (1)$$

où $v_k$ est l'amplitude du signal transmis pour l'utilisateur $k$, supposée constante pour un bloc de transmission.

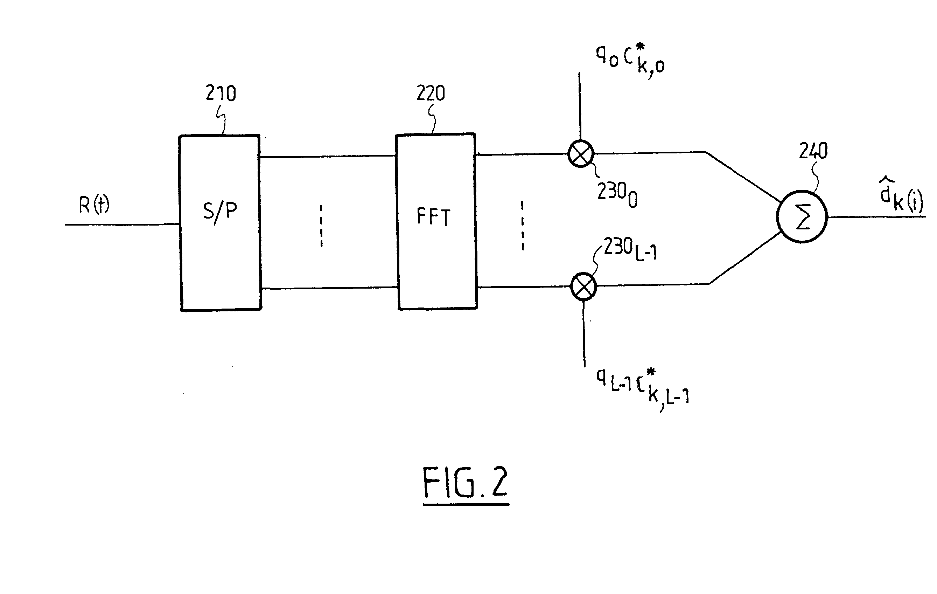

Un récepteur MC-CDMA pour un utilisateur $k$ donné a été illustré schématiquement en Fig. 2.

Le signal reçu démodulé est échantillonné à la fréquence « chip » et les échantillons appartenant à l'intervalle de garde sont supprimés (suppression non représentée). Le signal obtenu peut s'écrire :

$$R(t)=\sum_{k=0}^{K-1}\sum_{i=0}^{I-1}\sum_{\ell=0}^{L-1}h_{k\ell}(i).v_k.c_{k\ell}.d_k(i).\exp(j.2\pi\ell/L)+b(t) \qquad (2)$$

où $K$ est le nombre d'utilisateurs, $c_{k\ell}=c_k(\ell.T_c)$, et où $h_{k\ell}(i)$ traduit la réponse du canal de l'utilisateur $k$ à la fréquence de la sous-porteuse $\ell$ du symbole MC-CDMA émis au temps $i.T$ et où $b(t)$ est le bruit reçu.

Si l'on considère la voie descendante, les canaux de transmission ont des caractéristiques identiques et l'on peut écrire $h_{k\ell}=h_\ell$. On se limitera par la suite à l'étude de la voie descendante.

Les échantillons obtenus par échantillonnage à la fréquence « chip » sont parallélisés dans un convertisseur série/ parallèle 210 avant de subir une FFT dans le module 220. Les échantillons dans le domaine fréquentiel, en sortie de 220, sont égalisés et désétalés par la signature de l'utilisateur $k$. Pour ce faire, les échantillons du domaine fréquentiel sont multipliés par les coefficients $q_\ell.c_{k\ell}^*$ dans les multiplieurs $230_0,..., 230_{L-1}$, puis sommés en 240 pour fournir un symbole de sortie $\hat{d}_k(i)$.

Différentes possibilités d'égalisation ont été envisagées dans l'état de la technique :

- la combinaison MRC (*Maximum Ratio Combining*) définie par l'emploi des coefficients $q_\ell = h_\ell^*$ où .* est l'opération de conjugaison;
- la combinaison EGC (*Equal Gain Combining*) définie par l'emploi des coefficients $q_\ell = e^{-j\varphi\ell}$ où $h_\ell = \rho_\ell . e^{j\varphi}_\ell$;
- le forçage à zéro ZF (*Zero Forcing*) où $q_\ell = h_\ell^{-1}(i)$;
- le forçage à zéro ZF avec seuil (*Th*) où $q_\ell = h_\ell^{-1}(i)$ si $|h_\ell(i)| < Th$ et $q_\ell = 0$ (ou $q_\ell = e^{-j\varphi}_\ell$) sinon ;
- l'algorithme de minimisation de l'erreur quadratique moyenne MMSE (*Minimum Mean Square Error*) sur chacune des porteuses : $q_\ell = \dfrac{h_\ell}{|h_\ell|^2 + \sigma^2}$ où $\sigma^2$ est la variance du bruit sur la porteuse.

On rappelle qu'en MC-CDMA , la présence d'une période de garde permet de négliger l'interférence inter-symbole. L'égalisation peut être donc simplement réalisée au moyen d'une simple multiplication par un coefficient complexe, porteuse par porteuse.

Le récepteur illustré en Fig. 2 décode les données d'un utilisateur *k* sans prendre en compte l'interférence due aux autres utilisateurs. Il est dénommé pour cette raison mono-utilisateur ou SU (*Single User*).

Les techniques de détection multi-utilisateur sont connues, notamment dans les systèmes de télécommunication CDMA. Elles ont pour caractéristique commune de prendre en compte les interférences générées par les autres utilisateurs.

Une technique de détection multi-utilisateur ou MUD (*Multi User Detection*) pour MC-CDMA a été présentée dans l'article de J-Y. Beaudais, J.F. Hélard et J. Citerne intitulé « Linear MMSE detection technique for MC-CDMA » publié dans Electronics Letters, Vol. 36, N°7, pages 665-666, le 30 Mars 2000. La méthode d'égalisation proposée n'opère plus porteuse à porteuse mais symbole MC-CDMA par symbole MC-CDMA, en prenant en compte l'ensemble des porteuses. Elle est appelée pour cette raison égalisation GMMSE (*Global Minimum Mean Square Error*) ou, de manière équivalente, égalisation M-MMSE (*Matrix Minimum Mean Square Error*). Elle a pour but de minimiser l'erreur quadratique moyenne entre les symboles estimés $d_k(i)$ et les symboles transmis $d_k(i)$.

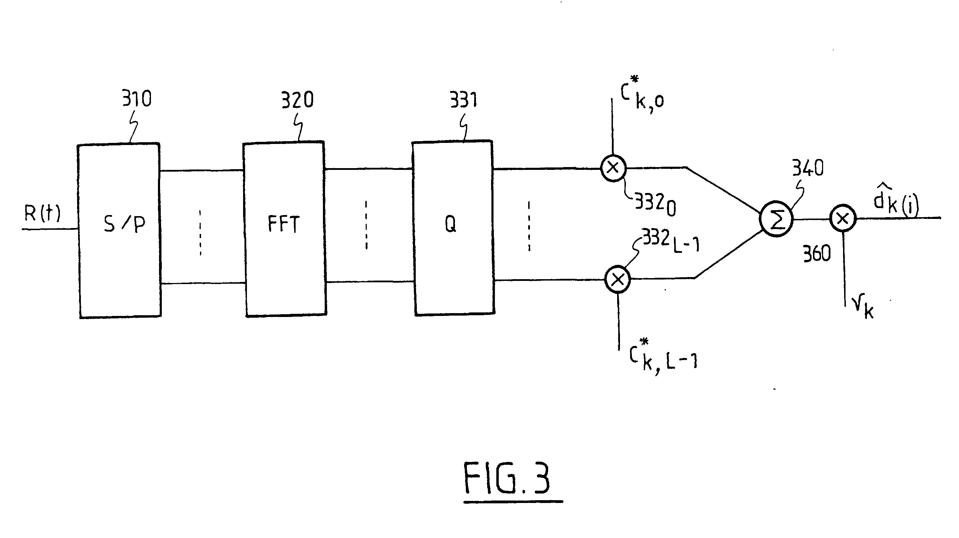

Un récepteur MC-CDMA à égalisation GMMSE pour un utilisateur *k* (encore appelée dans ce cas *per user MMSE*) a été représenté en Fig. 3. Il diffère de celui de la Fig. 2 en ce que l'égalisation est réalisée au moyen d'une multiplication 331 par une matrice **Q** des signaux des différentes porteuses. Après désétalement par multiplication en $332_0,...,332_{L-1}$ avec la signature de l'utilisateur *k* et sommation en 340, le signal obtenu est multiplié en 360 par le niveau $v_k$ d'émission relatif à l'utilisateur *k* pour fournir un symbole estimé $d_k$ (nous omettrons, par souci de simplification, l'indice temporel *i*).

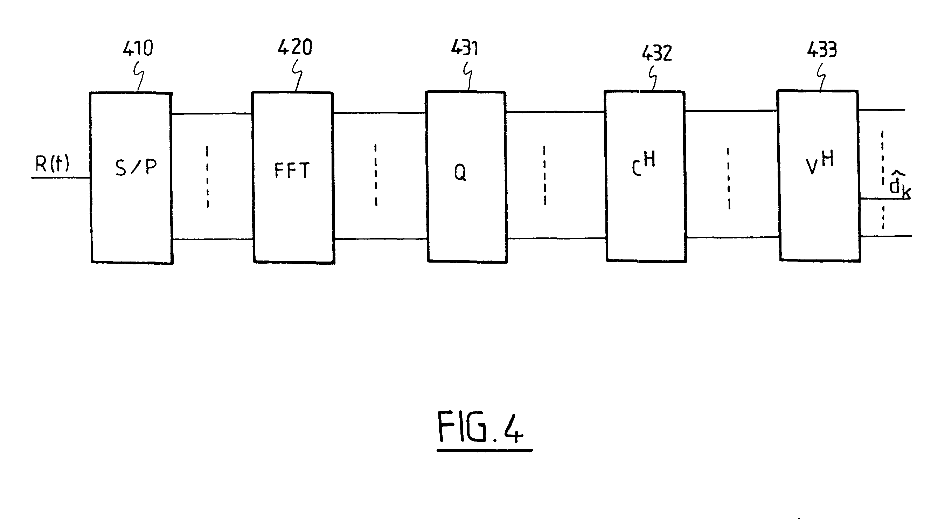

Un récepteur MC-CDMA à égalisation GMMSE, estimant les symboles $d_k$ transmis à destination des différents utilisateurs, a été représenté en Fig. 4. Les modules 410, 420 et 431 sont identiques aux modules 310, 320 et 331. Le désétalement est effectué en 432, au moyen de la multiplication par la matrice $\mathbf{C}^H$ où **C** est la matrice des N codes possibles ($.^H$ désigne le transposé conjugué). Plus précisément, la matrice **C** est la matrice dont les colonnes sont constituées par les N codes possibles $c_k$, k=0,..,N-1, chaque code $c_k$ étant un vecteur dont les composantes forment la séquence $c_{\ell k}$. Le vecteur en sortie de 432 est soumis à une multiplication en 433 par la matrice $\mathbf{V}^H$ où $\mathbf{V}=\mathbf{Diag}(v_0,..., v_{N-1})$ est la matrice diagonale représentant les amplitudes $v_k$ des signaux émis par la station de base à destination des N utilisateurs possibles. Lorsque la station de base sert moins de N utilisateurs, autrement dit lorsque le système ne travaille pas à pleine charge, les niveaux d'émission correspondant aux codes non utilisés sont nuls.

Le signal MC-CDMA en sortie de l'étape de FFT, 420, peut s'écrire sous la forme d'un vecteur **Y** de dimension N dont les composantes correspondent aux différentes porteuses. En reprenant les notations ci-dessus, on peut exprimer **Y** en fonction du vecteur **D** des symboles $d_k$ transmis à destination des différents utilisateurs :

$$Y=HCVD+b=AD+b \tag{3}$$

où **A=HCV** et où **b** est le vecteur des composantes de bruit.

La matrice diagonale **H** représente la réponse fréquentielle du canal aux différentes sous-porteuses, soit $\mathbf{H}=\mathbf{Diag}(h_0, h_1, ..., h_{N-1})$.

Le vecteur **Y** est un observable à partir duquel on peut estimer le vecteur **D** par filtrage de Wiener. Si **D** est le vecteur des symboles estimés pour les différents utilisateurs d'après l'équation de Wiener-Hopf :

$$\hat{D}=R_{DY}R_{YY}^{-1}Y=(R_{DD}A^H)A R_{DD}A^H+\sigma_b^2 . I_N^{-1}Y \tag{4}$$

où $\mathbf{R_{DY}}$, $\mathbf{R_{YY}}$, $\mathbf{R_{DD}}$ sont respectivement la matrice de covariance de $\mathbf{Y}$ et $\mathbf{D}$ et les matrices d'autocovariance de $\mathbf{Y}$ et de $\mathbf{D}$. Si l'on suppose que les symboles transmis $d_k$ sont décorrélés, on a $\mathbf{R_{DD}}=\mathbf{I_N}$ et donc :

$$\hat{D}=A^H(AA^H+\sigma_b^2.I_N)^{-1}Y \qquad (5)$$

Puisque $\mathbf{A^H}=\mathbf{V^H C^H H^H}$ on déduit de (5) que la matrice d'égalisation $\mathbf{Q}$ peut se mettre sous la forme :

$$Q=H^H(AA^H+\sigma_b^2.I_N)^{-1} \qquad (6)$$

Comme l'indique (6), l'opération d'égalisation passe par le calcul de la matrice $\mathbf{AA^H}$ et par l'inversion de la matrice $\mathbf{AA^H+\sigma_b^2.I_N}$ (ou de manière équivalente la résolution d'un système linéaire de rang N). Ces calculs consomment des ressources du terminal mobile et, ce, d'autant qu'ils doivent être effectués fréquemment, notamment en cas de variations rapides du canal de transmission. Or, l'on sait que les ressources des terminaux constituent précisément la partie critique d'un système de télécommunication mobile.

Le problème à la base de la présente invention est de proposer une méthode d'égalisation GMMSE pour voie descendante d'un système de télécommunication MC-CDMA qui ne mobilise pas d'importantes ressources calculatoires.

Ce problème est résolu par l'invention définie comme un méthode d'égalisation pour voie descendante d'un système de télécommunication transmettant des symboles MC-CDMA sur une pluralité de fréquences porteuses, dans laquelle une pluralité de liaisons est établie entre un émetteur et une pluralité de récepteurs pour transmettre une pluralité de signaux codés, chaque liaison utilisant un code d'accès distinct parmi N codes possibles, et dans laquelle, pour au moins récepteur, un vecteur ($\mathbf{Y}$) représentant les composantes du signal reçu par le récepteur sur les différentes fréquences porteuses est soumis à une étape de filtrage adapté pour fournir un vecteur observable ($\mathbf{Z}$, $\mathbf{Z'}$) et que ledit vecteur observable est utilisé pour effectuer une estimation desdits symboles transmis selon un critère de minimisation de l'erreur quadratique moyenne.

Avantageusement, ladite estimation comprend le calcul de la matrice $\mathbf{A^H A+\sigma_b^2 I_N}$ avec $\mathbf{A}=\mathbf{HCV}$ où $\mathbf{H}$ est une matrice donnant les caractéristiques du canal de transmission aux différentes fréquences porteuses, $\mathbf{C}$ est la matrice des codes possibles, $\mathbf{V}$ est une matrice diagonale donnant les niveaux d'émission des signaux codés au moyen desdits N codes possibles, $\sigma_b^2$ est la variance de bruit et $\mathbf{I_N}$ est la matrice unité de taille NxN. Ladite estimation pourra comprend une étape de résolution d'un système d'équations linéaires $\Omega \mathbf{D}=\mathbf{Z}$ où $\Omega=\mathbf{A^H A+\sigma_b^2 I_N}$, $\mathbf{Z}$ est ledit vecteur observable et $\mathbf{D}$ est le vecteur des symboles estimés pour les différentes liaisons.

Selon l'invention, on calcule la matrice $\mathbf{B}=\mathbf{C^H|H|^2 C}$ où $\mathbf{C}$ est la matrice des codes possibles et où $\mathbf{H}$ est une matrice donnant les caractéristiques du canal de transmission aux différentes fréquences porteuses.

On sélectionne, éventuellement à partir des niveaux d'émission, réels ou estimés, des signaux codés au moyen desdits N codes possibles, un sous-ensemble de codes parmi les N codes possibles. La matrice $\mathbf{B}$ est avantageusement réduite à une matrice $\mathbf{B'}$ de taille PxP ne comprennant que les P lignes et P colonnes correspondant aux codes sélectionnés. La matrice $\mathbf{C}$ des codes possibles peut être réduite à une matrice $\mathbf{C'}$ de taille NxP ne en retenant que les P colonnes correspondant aux codes sélectionnés. La matrice sera alors calculée sous la forme $\mathbf{B'}=\mathbf{C'^H|H|^2 C'}$ et où $\mathbf{H}$ est une matrice donnant les caractéristiques du canal de transmission aux différentes fréquences porteuses.

Si P codes parmi sont sélectionnés, la matrice $\mathbf{V}=\mathbf{Diag}(v_0,..,v_{N-1})$, où les $v$, sont les niveaux réels ou estimés, pourra être réduite à une matrice $\mathbf{V'}$ de taille PxP ne comportant plus que les niveaux associés aux dits codes sélectionnés, ladite estimation comprenant une étape de calcul de la matrice $\Omega'=\mathbf{V'^H B'V'}+\sigma_b^2.\mathbf{I_P}$ où $\sigma_b^2$ est la variance du bruit sur chaque porteuse et $\mathbf{I_P}$ la matrice unité de taille PxP. Dans ce cas, ladite estimation pourra comprendre une étape de résolution d'un système d'équations linéaires $\Omega'\mathbf{D'}=\mathbf{Z'}$ où $\mathbf{Z'}$ est la réduction du vecteur observable $\mathbf{Z}$ aux P composantes correspondant aux codes sélectionnés et où $\mathbf{D'}$ est le vecteur des symboles estimés sur les différentes liaisons utilisant lesdits codes sélectionnés.

L'invention est également définie par un dispositif d'égalisation pour un récepteur de système de télécommunication de type MC-CDMA, comprenant des moyens pour mettre en oeuvre la méthode d'égalisation telle qu'exposée ci-dessus. L'invention concerne enfin un récepteur pour système de télécommunication de type MC-CDMA comprenant un tel dispositif d'égalisation.

Les caractéristiques de l'invention mentionnées ci-dessus, ainsi que d'autres, apparaîtront plus clairement à la lecture de la description suivante faite en relation avec les figures jointes, parmi lesquelles :

La Fig. 1 représente de manière schématique la structure d'un émetteur MC-CDMA connu de l'état de la technique ;
La Fig. 2 représente de manière schématique la structure d'un récepteur MC-CDMA mono-utilisateur connu de l'état de la technique;

La Fig. 3 représente de manière schématique la structure d'un récepteur MC-CDMA utilisant une égalisation *per user* MMSE, connu de l'état de la technique;

La Fig. 4 représente de manière schématique la structure d'un récepteur MC-CDMA utilisant une égalisation GMMSE, connu de l'état de la technique;

La Fig. 5 représente de manière schématique la structure d'un récepteur MC-CDMA utilisant une méthode d'égalisation selon un premier mode de réalisation de l'invention ;

La Fig. 6 représente de manière schématique la structure d'un récepteur MC-CDMA utilisant une méthode d'égalisation selon un second mode de réalisation de l'invention.

Un première idée pour simplifier l'opération d'égalisation est de tirer profit du fait que le système ne travaille généralement pas à pleine charge. Lorsque le nombre P d'utilisateurs effectivement présents est inférieur au nombre N de codes possibles, on construit une matrice **V'** de taille PxP obtenue à partir de la matrice **V** en éliminant les éléments relatifs aux codes non utilisés. On peut supposer, sans perte de généralité que ces codes portent les indices 0,..P-1, d'où **V'=Diag**($v_0,..,v_{P-1}$). La matrice **C** peut être également réduite à une matrice **C'** de taille NxP ne comportant que les colonnes qui correspondent aux codes utilisés. La matrice **A,** produit des matrices **H,C** et **V** se réduit alors également à une matrice **A'** de taille NxP : **A'=HC'V'** et le vecteur **Y** s'écrit: **Y=A'D'+b** où **D'** est le vecteur **D** réduit aux composantes correspondants aux P utilisateurs présents.

L'équation (5) peut alors se mettre sous la forme :

$$\hat{D}'=A'^{H}(A'A'^{H}+\sigma_b^2.I_N)^{-1}Y \tag{7}$$

Cependant, l'équation (7) n'apporte malheureusement pas de simplification substantielle des calculs car elle fait intervenir la matrice **A'A'**$^H$ qui est encore de taille NxN bien que **A'** soit de taille réduite NxP. La taille de la matrice à inverser (ou de manière équivalente le rang du système d'équations linéaires à résoudre) reste donc fonction du nombre N de codes possibles, c'est-à-dire encore du nombre maximal d'utilisateurs que peut supporter le système.

Nous avons supposé jusqu'ici qu'un utilisateur n'employait qu'un seul code. De manière plus générale, nous ferons l'hypothèse qu'une pluralité de liaisons peuvent être établies entre l'émetteur et un utilisateur, chaque liaison employant un code distinct. Selon cette définition, un canal de transmission entre l'émetteur et un utilisateur peut supporter plusieurs liaisons. Ainsi, N devient le nombre maximal de liaisons que peut autoriser le système et P est le nombre de liaisons effectivement établies.

L'idée générale à la base de l'invention est de trouver une formulation de l'opération d'égalisation susceptible de simplification lorsque le nombre P de liaisons (de codes utilisés) est inférieur au nombre maximal N.

Considérons le vecteur **Y** en sortie de la FFT, on a vu que **Y=AD+b** où **D** est le vecteur des symboles à estimer. Soit **Z=A**$^H$**Y,** le résultat du filtrage adapté de **Y :** on sait que **Z** est un résumé exhaustif de **Y**. On peut prendre comme observable le vecteur ̶Z̶ au lieu de **Y** et estimer le vecteur **D** à partir de cet observable au moyen d'un filtrage de Wiener. Le vecteur estimé **D** s'écrit donc :

$$\hat{D}=R_{DZ}R_{ZZ}^{-1}Z \tag{8}$$

Or

$$R_{DZ}=E(DY^{H}A)=(R_{DD}A^{H}+R_{Db})A=A^{H}A$$

et de même

$$R_{ZZ}=A^{H}AR_{DD}A^{H}A+A^{H}R_{bb}A=(AA^{H}+\sigma_b^2 I_N)A^{H}A$$

d'où

$$\hat{D} = (A^{H}A+\sigma_b^2 I_N)^{-1}Z=(A^{H}A+\sigma_b^2 I_N)^{-1} A^{H}Y \tag{9}$$

Lorsque le système ne travaille pas à pleine charge, il est possible de réduire la matrice **A** à une matrice **A'** et de réécrire l'équation (9) sous la forme réduite :

$$\hat{D}=(A'^{H}A'+\sigma_{b}^{2}I_{P})^{-1} A'^{H}Y \tag{10}$$

où $I_P$ est la matrice unité de taille PxP.

On remarque que cette nouvelle formule d'estimation ne nécessite plus que l'inversion d'une matrice de taille PxP (ou de manière équivalente la résolution d'un système linéaire de P équations à P inconnues) au lieu d'une matrice de taille NxN comme précédemment. L'estimation des symboles s'en trouve considérablement simplifiée et, ce, d'autant que la charge du système est plus faible.

Nous allons maintenant montrer que, selon un mode de réalisation de l'invention, le calcul de la matrice **A'^H A'** figurant dans l'équation (10) peut être davantage simplifié lorsque la matrice des codes **C** possède certaines propriétés. En effet, considérons tout d'abord la matrice **A^H A.** Celle-ci peut encore s'exprimer:

$$A^{H}A=V^{H}(C^{H}H^{H}HC)V=V^{H}(C^{H}|H|^{2}C)V=V^{H}BV \tag{11}$$

où **B=C^H|H|^2C**.

Supposons tout d'abord que le code employé soit un code de Walsh-Hadamard (WH). On rappelle que le code WH peut être généré comme les colonnes d'une matrice $\mathbf{C}_{2p}$ obtenue par récurrence:

$$\mathbf{C}_{2p}=\begin{bmatrix} \mathbf{C}_p & \mathbf{C}_p \\ \mathbf{C}_p & -\mathbf{C}_P \end{bmatrix} \text{ et } \mathbf{C}_1=[1] \tag{12}$$

La matrice est réelle, symétrique, et égale à sa propre inverse. De plus, les séquences sont orthogonales.

Les éléments de **C** peuvent s'exprimer sous la forme : $c_{ij}=(-1)^{\langle ij \rangle}$ où $<i, j>$ est le produit scalaire des représentations binaires de $i$ et $j$ :

$$\langle i,j \rangle=\sum_{k} i_k j_k$$

On en déduit la propriété suivante :

$$c_{ki}^{*}c_{kj}=c_{k,i\oplus j} \tag{13}$$

où $i \oplus j$ représente l'addition bit à bit des entiers $i$ et $j$.
En effet :

$$\sum_{n} i_n k_n+\sum_{n} j_n k_n=\sum_{n}(i_n+j_n)k_n=\sum_{n}(i\oplus j)_n k_n$$

et donc $\langle k,i \rangle + \langle k, j \rangle = \langle k,i \oplus j \rangle$.
Il résulte de (13) que le produit conjugué de deux codes WH est encore un code WH.

Supposons maintenant que les codes utilisés soient des codes de Fourier, définis par : $c_{i,k} = exp(-j\, 2\pi\, ik/N)$. La matrice du code est symétrique.

$$c_{k,i}^{*}\, c_{kj} = c_{k,j-i} \tag{14}$$

où "*j-i*" désigne ici la soustraction modulo N.

Il en résulte là aussi que le produit conjugué de deux codes de Fourier est encore un code de Fourier.

Cette propriété peut être généralisée à une famille de codes obtenus par « rotation » des codes précédents, encore appelés codes tournés, tels que présentés dans l'article de A. Bury et al. intitulé « Diversity comparison of spreading transforms for multi-carrier spread spectrum transmission methods » publié dans Electronic Wireless 2000 Proceedings, Dresden Germany. La matrice d'un code tourné est définie par :

$$C^r = C.\ D(r) \tag{15}$$

où **D** est une matrice diagonale définie par le vecteur $\mathbf{r}=(r_0,..,r_{N-1})^T$ soit $\mathbf{D}=\mathbf{Diag}(r_0,...,r_{N-1})$ où $r_i = exp(j\varphi_i)$.

Il est important de noter que coder N symboles à destination des N utilisateurs au moyen de la matrice d'un code tourné est équivalent à effectuer une rotation de chacun de ces symboles par un angle $\varphi_i$ puis à appliquer la matrice du code initial. Autrement dit, un code tourné d'un code initial peut se ramener au code initial au prix d'une rotation de la constellation pour chacun des utilisateurs.

Si la matrice **C** du code initial est relative à un code de Fourier, alors pour le code de Fourier tourné :

$$C_{k,i}^{r\,*} C_{k,j}^r = r_i^*.C_{k,i}^*.r_j.C_{k,j} = \exp(\varphi j = \varphi_i).C_{k,j-i} = \lambda_{ij}.C_{k,j-1}^r \tag{16}$$

avec $\lambda_{ij} = \varphi_j - \varphi_i - \varphi_{j-i}$

De même, pour un code de Hadamard tourné :

$$C_{k,i}^{r\,*} C_{k,j}^r = r_i^*.c_{k,i}.r_j.c_{k,j} = exp(\varphi_j - \varphi_i).c_{k,j\oplus i} = \lambda_{ij} c_{k,j\oplus t}^r, \tag{17}$$

avec $\lambda_{ij} = \varphi_j - \varphi_i - \varphi_{j\oplus i}$

Par la suite, on considérera les codes vérifiant la propriété suivante :

$$c_{k,i}^* = \lambda_{ij}.c_{k,f(i,j)} \text{ ou } \lambda_{ij}.c_{k,(i,j)}^* \text{ que l'on notera } \lambda_{ij}.c_{k,f(i,j)}^{(*)} \tag{18}$$

où $f(i,j)$ est un indice dépendant de $i$ et $j$ et décrivant 0 à N-1 à $i$ constant ou à $j$ constant et où $\lambda_{ij}$ est un nombre complexe dépendant en général des indices $i$ et $j$.

Dans ce cas les coefficients $b_{ij}$ de la matrice $\mathbf{B}=\mathbf{C}^H|\mathbf{H}|^2\mathbf{C}$ peuvent s'exprimer par :

$$b_{ij} = \sum_{k=0}^{N-1} |h_k|^2 c_{k,i}^* c_{k,j} = \lambda_{ij} \sum_{k=0}^{N-1} |h_k|^2 c_{k,f(i,j)}^{(*)} \tag{19}$$

On calcule tout d'abord, par exemple, la première ligne de la matrice **B,** c'est-à-dire les coefficients $b_{0j}$, puis on en déduit les autres lignes par permutation et multiplication:

$$b_{ij} = \frac{\lambda_{ij}}{\lambda_{0,j}} b_{0,f_0^{-1}(f(i,j))}^{(*)} \qquad \text{où } f_0(k) = f(0,\ k) \tag{20}$$

Si l'on dispose d'une table *de* $f^{-1}_0 f,$ et, le cas échéant de $\frac{\lambda_{ij}}{\lambda_{0,j}}$, le calcul de la matrice **B** ne nécessite que le calcul d'une seule de ses lignes. A titre d'exemple, l'expression (20) s'écrit dans le cas d'un code WH : $b_{ij} = b_{0,i\oplus j}$.

Si l'on utilise par exemple un code WH, un code WH tourné ou encore un code de Fourier, un code de Fourier tourné, la première ligne de la matrice **B** peut être avantageusement obtenue par simple transformée du vecteur $\rho = (|h_0|^2,.., |h_{N-1}|^2)^T$.

En effet, dans le cas d'un code WH, la première ligne est obtenue par transformée de Hadamard de $\rho$ :

$$b_{0,j}=\sum_{k=0}^{N-1}|h_k|^2 c_{k,0}c_{k,j}=\sum_{k=0}^{N-1}|h_k|^2 c_{k,0\oplus j}=\sum_{k=0}^{N-1}|h_k|^2 c_{k,j}=\sum_{k=0}^{N-1}c_{j,k}|h_k|^2 \qquad (21)$$

et dans le cas d'un code de Fourier, la première ligne est obtenue par transformée de Fourier de ρ:

$$b_{0,j}=\sum_{k=0}^{N-1}|h_k|^2 c_{k,0}^* c_{k,j}=\sum_{k=0}^{N-1}|h_k|^2 c_{k,j-0}=\sum_{k=0}^{N-1}|h_k|^2 c_{k,j}=\sum_{k=0}^{N-1}c_{j,k}|h_k|^2 \qquad (22)$$

Avantageusement, la transformée de Fourier sera effectuée au moyen d'une FFT.

Si des versions tournées de ces codes sont utilisées, les coefficients de la première ligne de **B** se déduisent de (21) et (22) au moyen d'une simple multiplication par un coefficient complexe.

De manière générale, si le code employé vérifie la propriété (18), notamment pour un code de Hadamard, Hadamard tourné, Fourier ou Fourier tourné, on calculera avantageusement une ligne de la matrice **B** (ou une colonne puisqu'elle est hermitienne) et on en déduira les autres lignes (respectivement, les autre colonnes) au moyen d'opérations de permutation et le cas échéant de multiplication.

Considérons maintenant la matrice **A'$^H$A'** figurant dans le calcul d'estimation (10). La matrice **A'** peut encore s'écrire **A'=(HC)'V'** où **(HC)'** est la réduction de la matrice **HC** à ses P premières colonnes. On en déduit une première expression de **A'$^H$A'** :

$$A'^H A'=V'^H(C^H|H|^2C)'V'=V'^H B'V' \qquad (23)$$

Selon cette variante, on effectue d'abord de calcul de la matrice **B=C$^H$|H|$^2$C** en utilisant la méthode simplifiée, exposée plus haut, puis l'on procède à la réduction de dimension.

Alternativement, la matrice **A'$^H$A'** peut être obtenue directement à partir de **A'=HC'V'.** Une seconde expression de **A'$^H$A'** s'en déduit:

$$A'^H A'=V'^H(C'^H|H|^2C')V' \qquad (24)$$

Selon cette variante, on réduit d'abord la matrice des codes **C**, puis on calcule la matrice **C''|H|$^2$C'.**

Lorsque le nombre de codes P est faible, on optera pour le calcul de **A'$^H$A'** selon la formule (24). Ce calcul conduit à environ $(NP^2+2P^2+NP)$ opérations.

Si, en revanche, la réduction du nombre de codes n'est pas très importante, on optera pour le calcul selon la formule (23), dès lors qu'il existe un algorithme rapide pour l'application de la transformée **C**. Ce calcul est d'autant plus simple que, dans la plupart des cas, les codes de la matrice **C** vérifient la propriété (18). Si l'on utilise par exemple un code WH, la première ligne de la matrice **B** est obtenue par une transformée de Hadamard du vecteur $\rho=(|h_0|^2,...,|h_{N-1}|^2)^T$ nécessitant $N\log_2(N)$ opérations. Le calcul complet de **A'$^H$A'** requiert $(N\log_2(N)+2P^2)$ opérations. Cette opération sera donc plus efficace dès que $\log_2(N)$ sera plus petit que $P^2$. Cette conclusion s'applique également lorsque le code utilisé est un code de Fourier.

Avantageusement, on pourra passer de manière dynamique du calcul de **A'$^H$A'** selon (23) au calcul selon (24) et réciproquement, suivant la valeur de P.

Nous avons supposé jusqu'à présent que la réduction des matrices consistait à se limiter aux composantes relatives aux codes utilisés. En fait, une réduction plus poussée peut être obtenue sur la base de l'un des critère suivants :

(I) on sélectionne les P-1 (P entier donné tel que P<N) codes $c_m$ distincts de $c_k$ associés aux niveaux $v_m$ les plus élevés. En effet, les signaux de niveaux d'émission élevés sont potentiellement plus brouilleurs que les autres ;

(II) on sélectionne les codes $c_m$ distincts de $c_k$ associés aux niveaux $v_m>Th$ où $Th$ est un seuil prédéterminé.

Avantageusement, le seuil *Th* sera adaptatif et dépendra du niveau d'émission pour l'utilisateur considéré. On sélectionnera alors les codes $c_m$ tels que : $v_m > \mu. v_k$ avec, par exemple, $0 < \mu < 1$. Si le récepteur de l'utilisateur *k* utilise plusieurs codes d'indices $k_1,..,k_\Delta$, c'est-à-dire si l'utilisateur a établi plusieurs liaisons avec la station de base (le canal d'un utilisateur est alors constitué de plusieurs liaisons), on prendra en compte le code d'indice $k_\delta \in \{k_1,..,k_\Delta\}$ associé au niveau $v_{k\delta}$ le plus faible et l'on sélectionnera les codes $c_m$ tels que : $v_m > \mu.v_{k\delta}$

Bien entendu une combinaison des critères précédents est également envisageable. En outre, en complément à la sélection à partir des niveaux d'émission, on peut sélectionner parmi ceux retenus selon ce critère, seuls les codes les plus intrinsèquement brouilleurs (c'est-à-dire hormis toute considération de niveau d'émission) pour le code considéré. En effet, on sait, par exemple de l'article de D. Mottier et D. Castelain intitulé 'A spreading sequence allocation procedure for MC-CDMA tansmission systems' publié dans VTC' Fall 2000, Sept. 2000 inclus ici par référence, que, si les coefficients $h_k$ du canal sont corrélés, pour un code d'utilisateur donné, certains codes, à niveau d'émission égal, sont plus brouilleurs que d'autres. Plus précisément, interférence entre deux codes $c_i$ et $c_j$ est liée aux propriétés de la séquence « produit » $w_{ij}$, définie par $w_{ij}[k] = c_i[k] \, c^*_j[k]$. Nous appellerons ce critère de sélection le critère de brouillage intrinsèque.

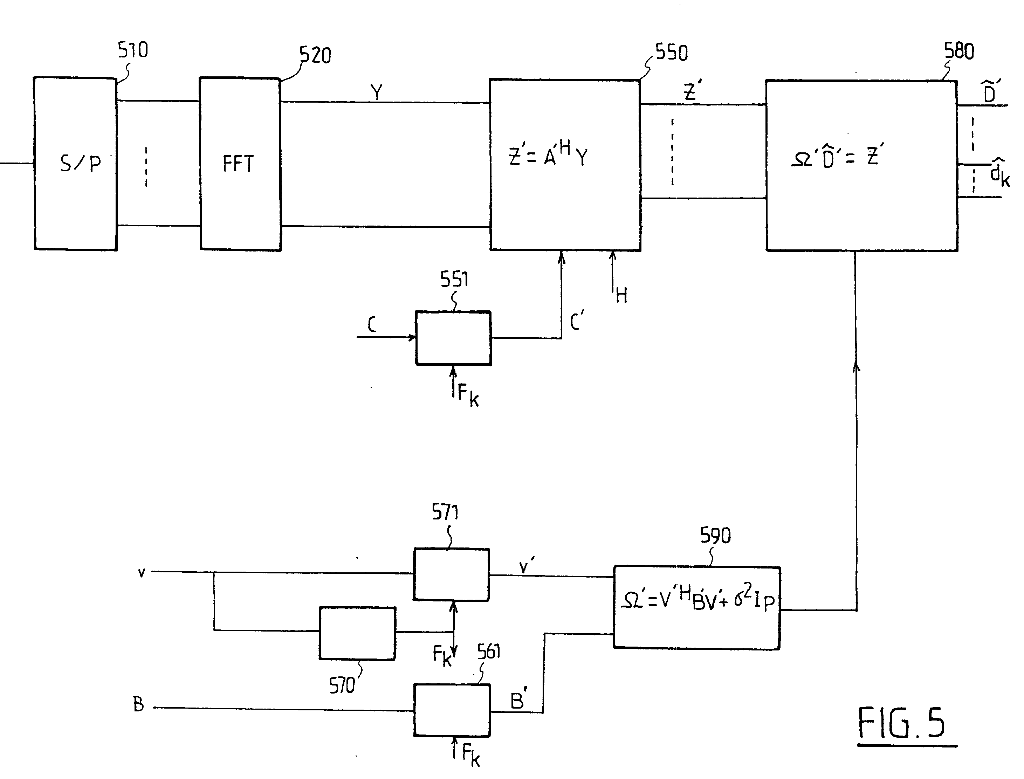

La Fig. 5 illustre un égaliseur GMMSE selon un premier mode de réalisation de l'invention.

Les modules 510, 520 sont identiques aux modules 410 et 420 de la Fig. 4. Le vecteur $\mathbf{v} = (v_0,...,v_{N-1})^T$ des niveaux d'émission, reçus ou estimés par le récepteur de l'utilisateur *k* considéré, est soumis en 570 à un module de sélection mettant en oeuvre un critère de sélection selon (I) ou (II), éventuellement en combinaison avec le critère de brouillage intrinsèque. Le module de sélection 570 détermine un ensemble $F_k$ c{0,..,N-1} d'indices de codes à sélectionner et le transmet aux multiplexeurs 551, 561 et 571. Le multiplexeur 571 sélectionne les composantes de $\mathbf{v}$ relatives aux indices de $F_k$ pour fournir le vecteur de taille réduite $\mathbf{v'}$. De même, les multiplexeurs 551 et 561 fournissent respectivement les matrices de taille réduite $\mathbf{B'}$ et $\mathbf{C}$. Le module 550 est un filtre adapté fournissant $\mathbf{Z'} = \mathbf{A'^H Y}$. Notons qu'en toute rigueur l'expression « filtrage adapté » ne convient qu'au cas où la sélection retient tous les indices des codes utilisés. Nous l'étendrons au cas où les codes faiblement interférents ne sont pas sélectionnés. Le module de calcul matriciel 590 calcule ensuite la matrice $\Omega' = \mathbf{V'^H B'V'} + \sigma_b^2 . \mathbf{I_P}$ et la transmet au module d'estimation 580. Ce dernier résout le système linéaire de P équations à P inconnues $d_k$ : $\Omega' \mathbf{D'} = \mathbf{Z'}$.

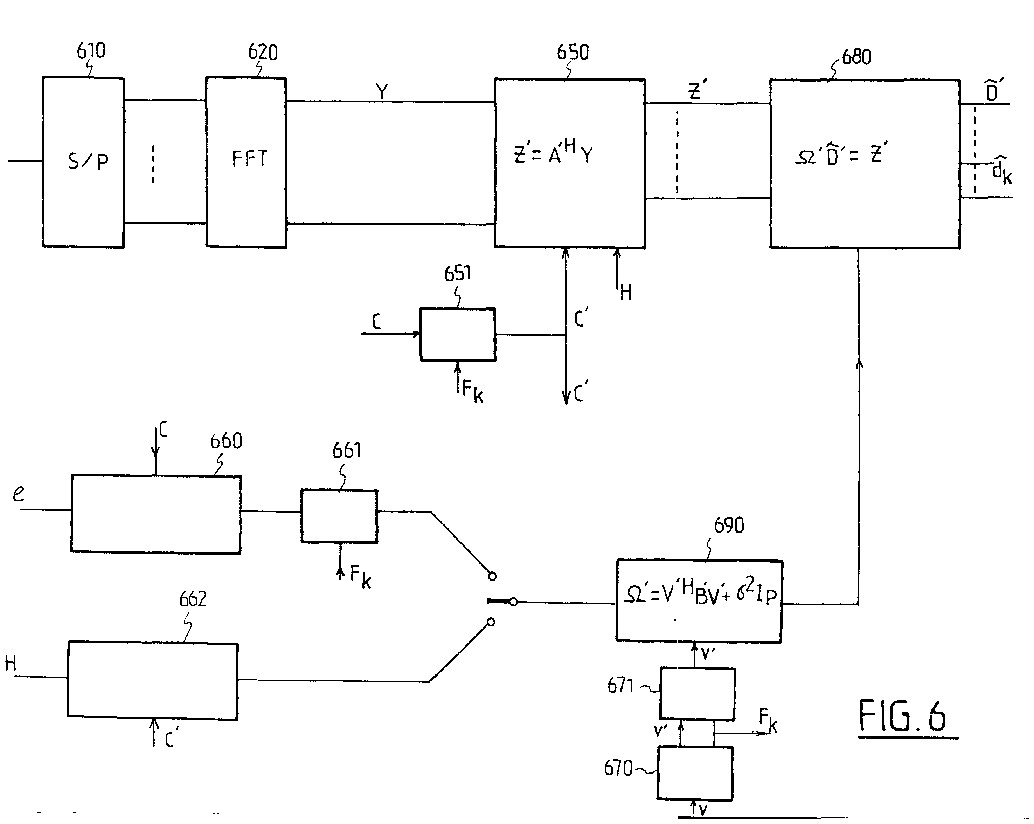

La Fig. 6 illustre un égaliseur GMMSE selon un second mode de réalisation de l'invention.

Les modules 610, 620, 650, 651, 661, 670, 671, 680, 690 sont respectivement identiques aux modules 510, 520, 550, 551, 561, 570, 571, 580, 590 de la Fig. 5.

Comme précédemment, le module 650 effectue un filtrage adapté sur vecteur $\mathbf{Y}$ et fourni le vecteur $\mathbf{Z'} = \mathbf{A'^H Y}$. L'égaliseur comprend ici deux branches possibles pour le calcul de $\mathbf{B'}$ selon la valeur de P :

Si $P^2 > \log_2 N$, le calcul est effectué dans la branche supérieure comprenant les modules 660 et 661. Le vecteur $\rho = (|h_0|^2,..,|h_{N-1}|^2)^T$ issu d'un estimateur de canal est soumis en 660 à une transformée (Hadamard, Fourier) correspondant au code utilisé pour fournir la première ligne de la matrice $\mathbf{B}$. Puis, à l'aide d'une table donnant la permutation des indices $f_0^{-1}f$, le module 660 génère au moyen de (20) les autres lignes de la matrice $\mathbf{B}$. Le multiplexeur 661 réduit ensuite la matrice $\mathbf{B}$ à une matrice $\mathbf{B'}$ de taille PxP en fonction de l'ensemble $F_k$ des indices à sélectionner, fourni par le module de sélection 670.

En revanche, si $P^2 \leq \log_2 N$, le calcul est effectué dans la branche inférieure. Le module 662 reçoit du module 651 la matrice réduite $\mathbf{C'}$ et calcule directement la matrice $\mathbf{B'}$ selon $\mathbf{B'} = \mathbf{C'^H |H|^2 C'}$. Le module 690 de calcul matriciel reçoit le vecteur de taille réduite $\mathbf{v'}$ du multiplexeur 671 et la matrice $\mathbf{B'}$ de la branche supérieure ou de la branche inférieure, selon le cas. Il calcule la matrice $\Omega' = \mathbf{V'^H B'V'} + \sigma_b^2 . \mathbf{I_P}$ et la transmet au module 680. Ce dernier résout alors le système linéaire de P équations à P inconnues $d_k$ : $\Omega' \mathbf{D'} = \mathbf{Z'}$.

Bien que le dispositif de réception MC-CDMA utilisant la méthode d'égalisation selon l'invention ait été représenté sous la forme de modules fonctionnels, il va de soi que tout ou partie de ce dispositif peut être réalisé au moyen d'un processeur unique dédié ou programmé pour remplir l'ensemble des fonctions décrites ou encore sous la forme d'une pluralité de processeurs dédiés ou programmés pour remplir chacun une partie desdites fonctions.

**Revendications**

**1.** Méthode d'égalisation pour voie descendante d'un système de télécommunication transmettant des symboles MC-CDMA sur une pluralité de fréquences porteuses, dans laquelle une pluralité de liaisons est établie entre un émetteur et une pluralité de récepteurs pour transmettre une pluralité de signaux codés, chaque liaison utilisant un code d'accès distinct parmi N codes possibles, méthode selon laquelle un vecteur **(Y)** représentant les composantes d'au moins un signal reçu par au moins un récepteur sur différentes fréquences porteuses est soumis à une étape de filtrage pour fournir un vecteur observable (**Z**, **Z'**), ledit vecteur observable étant destiné à être utilisé pour effectuer une estimation desdits symboles transmis selon un critère de minimisation de l'erreur quadratique moyenne, méthode **caractérisée en ce qu'**elle inclut :

- une étape de sélection, à partir de niveaux d'émission réels ou estimés de signaux codés au moyen desdits N codes possibles, d'un sous-ensemble de P codes parmi les N codes possibles, les P codes sélectionnés étant ceux qui sont attribués à des liaisons effectivement établies, et
- une étape de calcul d'une matrice **B'** de taille PxP, représentative, dans le cadre de la sélection précédemment opérée, d'une matrice $\mathbf{B=C^H|H|^2C}$ où **C** est la matrice des codes possibles et où **H** est une matrice donnant les caractéristiques du canal de transmission aux différentes fréquences porteuses, ladite matrice **B'** de taille PxP étant calculée :

- soit en réduisant la matrice **B** de taille NxN en n'en retenant que les P lignes et P colonnes correspondant aux codes sélectionnés au cours de l'étape de sélection,
- soit en appliquant une formule $\mathbf{B'=C'^H|H|^2C'}$ après qu'une matrice **C'** de taille NxP ait été calculée en réduisant la matrice **C** des codes possibles en n'en retenant que les P colonnes correspondant aux codes sélectionnés au cours de l'étape de sélection.

2. Méthode d'égalisation selon la revendication 1, **caractérisée en ce qu'**une matrice $\mathbf{V=Diag}(v_0,..,v_{N-1})$, où les $v_i$ sont les niveaux d'émission réels ou estimés, est réduite à une matrice **V'** de taille PxP ne comportant plus que les niveaux associés auxdits codes sélectionnés, ladite estimation comprenant une étape de calcul d'une matrice $\Omega\mathbf{'=V'^HB'V'+}\sigma_b^2\mathbf{.I_P}$ où $\sigma_b^2$ est la variance du bruit sur chaque porteuse et $\mathbf{I_P}$ la matrice unité de taille PxP.

3. Méthode d'égalisation selon la revendication 2, **caractérisée en ce que** ladite estimation comprend une étape de résolution d'un système d'équations linéaires $\Omega\mathbf{'D'=Z'}$ où **Z'** est la réduction du vecteur observable **Z** aux **P** composantes correspondant aux codes sélectionnés et où **D'** est le vecteur des symboles estimés sur les différentes liaisons utilisant lesdits codes sélectionnés.

4. Dispositif d'égalisation pour un récepteur de système de télécommunication de type MC-CDMA, **caractérisé en ce qu'**il comprend des moyens pour mettre en oeuvre la méthode d'égalisation selon l'une des revendications précédentes.

5. Récepteur pour système de télécommunication de type MC-CDMA, **caractérisé en ce qu'**il comprend un dispositif d'égalisation selon la revendication 4.

**Patentansprüche**

1. Ausgleichsverfahren für eine Abwärtsverbindung eines Telekommunikationssystems, das MC-CDMA-Symbole auf einer Vielzahl von Trägerfrequenzen überträgt, bei dem eine Vielzahl von Verbindungen zwischen einem Sender und einer Vielzahl von Empfängern aufgebaut wird, um eine Vielzahl von codierten Signalen zu übertragen, wobei jede Verbindung einen getrennten Zugangscode aus N möglichen Codes verwendet, gemäß welchem Verfahren ein Vektor (Y), der die Komponenten mindestens eines von mindestens einem Empfänger auf verschiedenen Trägerfrequenzen empfangenen Signals darstellt, einem Filterschritt unterzogen wird, um einen beobachtbaren Vektor (Z, Z') zu liefern, wobei der beobachtbare Vektor dazu bestimmt ist, verwendet zu werden, um eine Schätzung der übertragenen Symbole gemäß einem Minimierungskriterium des mittleren quadratischen Fehlers durchzuführen, wobei das Verfahren **dadurch gekennzeichnet ist, dass** es umfasst:

- ausgehend von realen oder geschätzten Sendepegeln von mittels der N möglichen Codes codierten Signalen einen Schritt zum Auswählen einer Untereinheit von P Codes aus den N möglichen Codes, wobei die ausgewählten P Codes die sind, die tatsächlich aufgebauten Verbindungen zugewiesen sind, und

- einen Schritt zum Berechnen einer Matrix B' mit der Größe PxP, die im Rahmen der zuvor ausgeführten Auswahl für eine Matrix $B=C^H|H|^2C$ repräsentativ ist, wobei C die Matrix der möglichen Codes ist und wobei H eine Matrix ist, die die Merkmale des Übertragungskanals bei den verschiedenen Trägerfrequenzen angibt, wobei die Matrix B' mit der Größe PxP wie folgt berechnet wird:

- entweder durch Reduzieren der Matrix B mit der Größe NxN, indem nur die P Zeilen und P Spalten berücksichtigt werden, die den im Laufe des Auswahlschritts ausgewählten Codes entsprechen,

- oder durch Anwenden einer Formel B'=$C^H$|H|$^2$C', nachdem eine Matrix C' mit der Größe NxP berechnet wurde, indem die Matrix C der möglichen Codes reduziert wurde, indem nur die P Spalten berücksichtigt wurden, die den im Laufe des Auswahlschritts ausgewählten Codes entsprechen.

2. Ausgleichsverfahren nach Anspruch 1, **dadurch gekennzeichnet, dass** eine Matrix V=Diag($v_0$, ..., $V_{N-1}$), wobei $v_i$ die realen oder geschätzten Sendepegel sind, auf eine Matrix V' mit der Größe PxP reduziert wird, die nur noch die den ausgewählten Codes zugewiesenen Pegel enthält, wobei die Schätzung einen Schritt zum Berechnen einer Matrix $\Omega = V'^H B, V,+\sigma_b^2 \cdot I_P$ umfasst, wobei $\sigma_b^2$ die Varianz des Rauschens auf jeder Trägerfrequenz und Ip die Einheitsmatrix mit der Größe PxP ist.

3. Ausgleichsverfahren nach Anspruch 2, **dadurch gekennzeichnet, dass** die Schätzung einen Schritt zum Lösen eines linearen Gleichungssystems $\Omega'D'=Z'$ umfasst, wobei Z' die Reduzierung des beobachtbaren Vektors Z auf die P Komponenten ist, die den ausgewählten Codes entsprechen, und wobei D' der Vektor der auf den verschiedenen Verbindungen, die die ausgewählten Codes verwenden, geschätzten Symbole ist.

4. Ausgleichsvorrichtung für einen Empfänger eines Telekommunikationssystems des Typs MC-CDMA, **dadurch gekennzeichnet, dass** sie Mittel umfasst, um das Ausgleichsverfahren nach einem der vorhergehenden Ansprüche umzusetzen.

5. Empfänger für ein Telekommunikationssystem des Typs MC-CDMA, **dadurch gekennzeichnet, dass** er eine Ausgleichsvorrichtung nach Anspruch 4 umfasst.

**Claims**

1. Equalisation method for a downlink channel in a telecommunication system transmitting MC-CDMA symbols on a plurality of carrier frequencies, in which a plurality of links is established between a transmitter and a plurality of receivers in order to transmit a plurality of coded signals, each link using a distinct access code amongst N possible codes, a method according to which a vector (**Y**) representing the components of at least one signal received by at least one receiver on different carrier frequencies is subjected to a filtering step in order to supply an observable vector (**Z**, **Z'**), said observable vector being intended to be used for effecting an estimation of the said transmitted symbols according to a mean square error minimisation criterion, the method being **characterised in that** it includes:

   - a step of selecting, from real or estimated transmission levels of coded signals by means of the said N possible codes, a subset of P codes amongst the N possible codes, the selected P codes being those which are allocated tc links effectively established, and
   - a step of calculating a matrix **B'** of size PXP, representing, within the framework of the previously operated selection, a matrix **B=$C^H$|H|$^2$C** where **C** is the matrix of the possible codes and **H** is a matrix giving the characteristics of the transmission channel at the different carrier frequencies, said matrix **B'** of size PXP being calculated:

   - either by reducing the matrix **B** of size NxN by retaining only the P rows and P columns corresponding to the codes selected during the selection step,
   - or by applying a formula **B'=$C'^H$|H|$^2$C'** after a matrix **C'** of size NxP has been calculated by reducing the matrix **C** of the possible codes by only retaining the P columns corresponding to the codes selected during the selection step.

2. Equalisation method according to claim 1, **characterised in that** a matrix **V=Diag** ($v_0$, ... , $v_{N-1}$), where the $v_1$ are real or estimated transmission levels, is reduced to a matrix **V'** of size PXP which only includes the levels associated with the said selected codes, the said estimation comprising a step of calculating a matrix $\Omega$**=$V'^H$B' $V'$+$\sigma_b^2$.$I_p$** where $\sigma_b^2$ is the variance of the noise on each carrier and **$I_P$** is the unit matrix of size PxP.

3. Equalisation method according to claim 2, **characterised in that** the said estimation includes a step of resolving a system of linear equations $\Omega'$**D'=Z'** where **Z'** is the reduction of the observable vector **Z** to the P components corresponding to the selected codes and where **D'** is the vector of the symbols estimated on the different links using the said selected codes.

4.  Equalisation device for a receiver of a telecommunication system of the MC-CDMA type, **characterised in that** it comprises means for implementing the equalisation method according to one of the preceding claims.

5.  Receiver for a telecommunication system of the MC-CDMA type, **characterised in that** it comprises an equalisation device according to claim 4.

EP 1 244 244 B1

$d_{k(i)}$

$c_{k(t-iT)}$

110

120 S/P

130 IFFT

140 P/S

150

$\gamma_k$

$s_k^{(t)}$

<u>FIG.1</u>

FIG.2

EP 1 244 244 B1

FIG.3

FIG.4

FIG.5

$\underline{\text{FIG.6}}$